**Europäisches Patentamt**

**European Patent Office**

**Office européen des brevets**

(19)

(11) Veröffentlichungsnummer: **0 476 514 B1**

(12) # EUROPÄISCHE PATENTSCHRIFT

(45) Veröffentlichungstag der Patentschrift: **02.08.95**

(21) Anmeldenummer: **91115412.8**

(22) Anmeldetag: **12.09.91**

Die Akte enthält technische Angaben, die nach dem Eingang der Anmeldung eingereicht wurden und die nicht in dieser Patentschrift enthalten sind.

(51) Int. Cl.6: **C08G 18/80**, C08G 18/64, C08G 59/40, C09D 5/44

---

(54) **Verfahren zur Herstellung von Vernetzungskomponenten für kathodisch abscheidbare Lackbindemittel.**

---

(30) Priorität: **17.09.90 AT 1875/90**

(43) Veröffentlichungstag der Anmeldung:
**25.03.92 Patentblatt 92/13**

(45) Bekanntmachung des Hinweises auf die Patenterteilung:
**02.08.95 Patentblatt 95/31**

(84) Benannte Vertragsstaaten:
**DE ES FR GB IT**

(56) Entgegenhaltungen:
**EP-A- 0 000 016**
**EP-A- 0 121 837**
**EP-A- 0 149 156**

(73) Patentinhaber: **Vianova Kunstharz Aktiengesellschaft**
**Bundesstrasse 175**
**A-8402 Werndorf (AT)**

(72) Erfinder: **Hönig, Helmut, Dr.**
**Seebachergasse 10**
**A-8010 Graz (AT)**
Erfinder: **Matzer, Herbert**
**Grossgrabenweg 21**
**A-8010 Graz (AT)**
Erfinder: **Pampouchidis, Georg, Dr.**
**Obere Teichstrasse 31**
**A-8010 Graz (AT)**
Erfinder: **Paar, Willibald, Dr.**
**Schanzelgasse 19**
**A-8010 Graz (AT)**

---

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Herstellung von Vernetzungskomponenten für kationische Lackbindemittel, wobei diese Vernetzungskomponenten Umsetzungsprodukte von hydroxylfunktionellen Carbamatverbindungen mit halbblockierten Diisocyanaten sind.

Kationische Lackbindemittel auf verschiedener Basis werden in ihrer protonisierten, wasserverdünnbaren Form insbesonders im Elektrotauchlackierverfahren (K-ETL-Verfahren) für korrosionsfeste Grundierungen oder dekorative Einschichtlackierungen eingesetzt.

Bei kationischen Bindemitteln stellt jedoch die für andere Lacksysteme übliche Vernetzung durch Aminoharze oder Phenolharze aufgrund des basischen Charakters des applizierten Films keine optimale Lösung dar.

In der US-PS 2,995,531 wird daher ein Verfahren vorgeschlagen, verkappte Polyisocyanate, welche bei der Einbrenntemperatur entkappen, zur Vernetzung heranzuziehen. Diese Methode wird gemäß DE-PS 20 57 799 auch für die durch das K-ETL-Verfahren applizierten Lackfilme eingesetzt. In einer großen Anzahl von Veröffentlichungen werden derartige Vernetzungskomponenten für K-ETL-Bindemittel in vielfältiger Weise modifiziert.

Die EP-A2-149 156 beschreibt Vernetzungskomponenten auf der Basis von Carbamaten aus polyprimären Aminen und organischen Carbonaten, die Urethanverknüpfungen ohne Verwendung von Isocyanatverbindungen erlauben.

Bei allen nach diesem Stand der Technik hergestellten Vernetzungskomponenten ist jedoch eine Erniedrigung der Einbrenntemperatur nur bei Einsatz relativ großer Mengen an Schwermetall-Katalysatoren, wie Zinn- oder Bleisalzen, möglich.

Es wurde nun gefunden, daß die Nachteile des Standes der Technik vermieden werden können, wenn man als Vernetzungskomponente Umsetzungsprodukte von hydroxylfunktionellen Carbamatverbindungen mit halbblockierten Diisocyanaten einsetzt.

Die vorliegende Erfindung betrifft demgemäß ein Verfahren zur Herstellung von Vernetzungskomponenten für Hydroxylgruppen und/oder primäre oder sekundäre Aminogruppen aufweisende kationische Lackbindemittel, welches dadurch gekennzeichnet ist, daß man 50 bis 100 Mol-% der isocyanatreaktiven Gruppen von hydroxylfunktionellen Carbamatverbindungen, wie sie in bekannter Weise durch Reaktion von Alkylencarbonaten mit aliphatischen, primäre und/oder sekundäre und gegebenenfalls tertiäre, reaktionsinerte Aminogruppen aufweisenden Monoaminen und/oder Diaminen und/oder Triaminen und/oder Tetraaminen und/oder Alkanolaminen erhalten werden, mit jeweils entsprechenden äquimolaren Mengen an durch Monohydroxylverbindungen halbblockierten Diisocyanaten, deren Entblockungstemperatur unter 180°C liegt, bei 60 bis 120°C umsetzt.

Die Erfindung betrifft weiters die Verwendung der nach diesem Verfahren hergestellten Vernetzungskomponenten in Kombination mit Hydroxylgruppen und/oder primäre oder sekundäre Aminogruppen aufweisenden und nach Protonierung wasserverdünnbaren kationischen Basisharzen als Bindemittel für wasserverdünnbare Lacke, insbesonders für kathodisch abscheidbare Elektrotauchlacke.

Die erfindungsgemäß hergestellten Vernetzungskomponenten ergeben in Kombination mit Hydroxylgruppen und/oder primäre oder sekundäre Aminogruppen tragenden kationischen Harzkomponenten, vorzugsweise mit Epoxid-Amin-Addukte oder ähnliche Molekülbausteine aufweisenden Produkten, Bindemittel, welche bereits bei Temperaturen ab 140°C eingebrannt werden können. Die dabei erhaltenen Filme zeigen eine hervorragende Korrosionsfestigkeit auf nichtvorbehandelten oder vorbehandelten Substraten.

Die erfindungsgemäß eingesetzten hydroxylfunktionellen Carbamatverbindungen werden in bekannter Weise durch Reaktion von cyclischen organischen Carbonaten, insbesonders von Alkylencarbonaten, wie Ethylencarbonat oder Propylencarbonat, mit aliphatischen, primäre und/oder sekundäre und gegebenenfalls tertiäre, reaktionsinerte Aminogruppen aufweisenden Monoaminen und/oder Diaminen und/oder Triaminen und/oder Tetraaminen und/oder Alkanolaminen erhalten.

Für den Einsatz im erfindungsgemäßen Verfahren können auch hydroxylfunktionelle Carbamatverbindungen verwendet werden, die als Ausgangsprodukte sekundäre Aminoverbindungen enthalten, welche durch Reaktion von 1 Mol aliphatischen, primäre Aminogruppen aufweisenden Diaminen mit 2 Mol Monoepoxidverbindungen oder von 2 Mol aliphatischen, eine primäre Aminogruppe aufweisenden Monoaminen und/oder von aliphatischen, eine primäre und eine tertiäre reaktionsinerte Aminogruppe aufweisenden Diaminen mit 1 Mol Diepoxidverbindungen erhalten wurden.

Selbstverständlich können auch Mischungen verschiedener Amine eingesetzt werden.

Die Synthese der Carbamatverbindungen erfolgt in bekannter Weise bei 60 bis 120°C bis zu einer Aminzahl von unter 10 mg KOH/g.

2

EP 0 476 514 B1

Die Herstellung der erfindungsgemäßen Vernetzungskomponenten erfolgt durch Reaktion der isocyanatreaktiven Hydroxylgruppen und der gegebenenfalls vorliegenden sekundären Aminogruppen der Carbamatverbindungen mit halbblockierten Diisocyanatverbindungen bei 60 bis 120°C, gegebenenfalls in Gegenwart von Katalysatoren, wie Triethylamin oder Dibutylzinndilaurat.

Von den vorhandenen isocyanatreaktiven Gruppen werden 50 bis 100 Mol-% mit den jeweils äquimolaren Mengen an halbblockierten Diisocyanaten umgesetzt.

Die halbblockierten Diisocyanate werden in bekannter Weise durch Reaktion äquimolarer Mengen eines Diisocyanates mit einer Monohydroxylverbindung erhalten.

Es können die bekannten aliphatischen, cycloaliphatischen und aromatischen Diisocyanate eingesetzt werden. Als Vertreter dieser Verbindungen seien Hexamethylendiisocyanat, Isophorondiisocyanat, Toluylendiisocyanat oder das Xylylendiisocyanat erwähnt. Bevorzugt werden Diisocyanate verwendet, deren Isocyanatgruppen eine unterschiedliche Reaktivität aufweisen, wie Toluylen- oder Isophorondiisocyanat.

Die durch Monohydroxylverbindungen halbblockierten Diisocyanate sollen eine für die Praxis geeignete Entblockungstemperatur von unter 180°C besitzen.

Geeignete monohydroxylfunktionelle Verbindungen für die Blockierung der Isocyanatgruppe sind aliphatische Alkohole oder Glykolether, wie 2-Ethylhexanol oder Ethylenglykolmonoethylether, oder ungesättigte Alkohole, wie Hydroxyethylacrylat. Es können auch substituierte Phenole, wie Methylphenol und homologe Verbindungen, oder Kombinationen verschiedener Blockierungsmittel verwendet werden. Als besonders bevorzugte Monohydroxylverbindungen werden Ketoxime eingesetzt, wodurch die Einbrenntemperatur auch bei nichtkatalysierten Bindemittelsystemen bis auf 140°C gesenkt werden kann.

Die Herstellung der Lacke unter Verwendung der erfindungsgemäß hergestellten Vernetzungskomponente erfolgt in bekannter Weise durch Mischen mit der Basisharzkomponente bei mäßig erhöhter Temperatur. Die erfindungsgemäß hergestellten Vernetzungskomponenten werden dabei in einer Menge von 10 bis 40 Gew.-%, vorzugsweise 15 bis 30 Gew.-%, bezogen auf das Gesamtbindemittel eingesetzt. Die Formulierung der Lacke, ihre Pigmentierung, Herstellung und Verarbeitung, insbesonders nach dem kathodischen Elektrotauchlackierverfahren, ist dem Fachmann bekannt.

Die folgenden Beispiele erläutern die Erfindung, ohne sie in ihrem Umfang zu beschränken. Alle Angaben in Teilen oder Prozenten beziehen sich, soferne nichts anderes angegeben ist, auf Gewichtseinheiten.

In den Beispielen werden folgende Abkürzungen für die eingesetzten Rohstoffe verwendet:

(a) Aminoverbindungen

| | |
|---|---|
| PA | n-Pentylamin |
| DOLA | Diethanolamin |
| AEPD | 2-Aminoethylpropandiol-1,3 |
| AEEA | Aminoethylethanolamin |
| HMDA | 1,6-Hexamethylendiamin |
| DETA | Diethylentriamin |
| DA I | Umsetzungsprodukt aus 1 Mol Polyoxyalkylendiamin (Molgew. ca. 400) mit 2 Mol 2-Ethylhexylglycidylether |
| DA II | Umsetzungsprodukt aus 1 Mol eines Diepoxidharzes auf Basis Polypropylenglykol (Molgew. ca. 640) mit 2 Mol 3-Diethylamino-1-propylamin |

(b) Cyclische Carbonate

| | |
|---|---|
| EC | Ethylencarbonat |
| PC | Propylencarbonat |

(c) Diisocyanatverbindungen

| | |
|---|---|
| IC 1 | Hexamethylendiisocyanat |
| IC 2 | Toluylendiisocyanat 2,4 |
| IC 3 | Isophorondiisocyanat |
| IC 4 | Xylylendiisocyanat |

(d) Hydroxylfunktionelle Blockierungsmittel

| | |
|---|---|
| HV 1 | Ethylenglykolmonobutylether |
| HV 2 | 2-Ethylhexanol |
| HV 3 | Methylethylketoxim |
| HV 4 | 2-Hydroxypropylacrylat |

(e) Organische Lösungsmittel

| | |
|---|---|
| DGDME | Diethylenglykoldimethylether |
| MIBK | Methylisobutylketon |

3

| X | Xylol |
|---|---|

(f) Katalysatoren

| TEA | Triethylamin |
|---|---|
| DBTL | Dibutylzinndilaurat |
| DMBA | Dimethylbenzylamin |

Die Menge und die Art der Ausgangsstoffe für die Herstellung der Vernetzungskomponenten, sowie die Reaktionsbedingungen, kann den folgenden Tabellen 1 bis 3 entnommen werden.

Für die Prüfung der Vernetzungskomponenten gemäß Beispiel 1 - 8 in kathodisch abscheidbaren Elektrotauchlacken wurden folgende Basisharze hergestellt:

(BH 1): In einem mit Rührer, Thermometer und Rückflußkühler ausgestattetem Reaktionsgefäß werden 1000 g eines Epoxidharzes (Basis Bisphenol A; Epoxidäquivalentgewicht ca. 500) in 512 g Ethylenglykolmonoethylether bei 60 bis 70°C gelöst. Anschließend werden 37 g Diethylamin und 158 g Diethanolamin zugegeben und der Ansatz 3 Stunden bei 100°C reagiert. (Hydroxylzahl = 375 mg KOH/g). Der resultierende Festkörpergehalt beträgt 70 %.

(BH 2): Zu einer Lösung von 1000 g eines Epoxidharzes (Basis Bisphenol A; Epoxidäquivalentgewicht ca. 500) in 551 g Methoxypropanol werden bei 70°C 168 g Isononansäure, 53 g Diethanolamin und 33 g Diethylaminopropylamin zugegeben und das Reaktionsgemisch bei 95 bis 100°C so lange gehalten, bis eine Säurezahl von unter 3 mg KOH/g erreicht ist (Hydroxylzahl = 270 mg KOH/g). Der resultierende Festkörpergehalt beträgt 69,5 %.

(BH 3): 500 Tle eines Epoxidharzes (Basis Bisphenol A; Epoxidäquivalentgewicht ca. 500) werden in 214 Tlen Propylenglykolmonomethylether gelöst und bei 110°C mit 83 Tlen eines Halbesters aus Phthalsäureanhydrid und 2-Ethylhexanol in Gegenwart von 0,5 g Triethylamin als Katalysator bis zu einer Säurezahl von weniger als 3 mg KOH/g reagiert. Dann werden 120 Tle eines NH-funktionellen Oxazolidins aus Aminoethylethanolamin, 2-Ethylhexylacrylat und Formaldehyd, sowie 26 Tle Diethylaminopropylamin zugefügt und der Ansatz bei 80°C bis zu einem Epoxidwert von praktisch 0 reagiert. Der Ansatz wird mit 200 Tlen Propylenglykolmonomethylether verdünnt und mit 97 Tlen 3 n-Ameisensäure partiell neutralisiert. Der resultierende Festkörpergehalt beträgt 58,8 %.

Aus den in Tab. 4 angegebenen Bindemittelmischungen wurden Lacke entsprechend den in dieser Tabelle gemachten Angaben hergestellt und nach Neutralisation mit Ameisensäure und Verdünnen mit deionisiertem Wasser auf einen Festkörpergehalt von 18 % auf zinkphosphatiertes Stahlblech in bekannter Weise elektrisch abgeschieden. Bei der angegebenen Einbrenntemperatur zeigen beschichtete Bleche mit einer Filmstärke von 23 ± 2 μm eine Salzsprühbeständigkeit nach ASTM-B 117-85 von mehr als 1000 Stunden (Ablösung am Kreuzschnitt unter 2 mm).

Die eingesetzte Farbpaste setzt sich aus 100 Tlen Anreibeharz (fest), 1 Tl Farbruß, 12 Tlen basischem Bleisilikat und 147 Tlen Titandioxid zusammen. Als Anreibeharz wird (BH 3) verwendet.

Als Vergleichsbeispiel (V) wurde ein Urethanvernetzer wie nachfolgend angegeben synthetisiert:
134 Tle Trimethylolpropan werden in 239 Tlen Diethylenglykoldimethylether bei 80°C mit 821 Tlen eines mit 2-Ethylhexanol halbblockierten Toluylendiisocyanats bis zum vollständigen Verbrauch aller Isocyanatgruppen umgesetzt.

TAB 1

| Hydroxylfunktionelle Carbamatverbindungen (HC) | | | | | | |
|---|---|---|---|---|---|---|
| HC | Tle Amin (Mol) | Tle Carbonat (Mol) | Funktionalität | | Reaktionstemperatur °C | MG |
| | | | Mol OH | Mol NH | | |
| 1 | 87 PA (1,0) | 88 EC (1,0) | 1 | 1 | 70 | 175 |
| 2 | 105 DOLA (1,0) | 102 PC (1,0) | 3 | 0 | 110 | 207 |
| 3 | 119 AEPD (1,0) | 102 PC (1,0) | 3 | 1 | 80 | 221 |
| 4 | 103 DETA (1,0) | 264 EC (3,0) | 3 | 2 | 60 | 367 |
| 5 | 772 DA I (1,0) | 204 PC (2,0) | 4 | 0 | 120 | 976 |
| 6 | 900 DA II(1,0) | 204 PC (2,0) | 4 | 0 | 120 | 1104 |
| 7 | 116 HMDA (1,0) | 204 PC (2,0) | 2 | 2 | 110 | 320 |
| 8 | 104 AEAA (1,0) | 204 PC (2,0) | 3 | 1 | 110 | 308 |

TAB 2

| Halbblockierte Diisocyanate (HDI) | | | |
|---|---|---|---|
| HDI | Tle Diisocyanat (Mol) | Tle Blockierungsmittel (Mol) | MG |
| 1 | 168 IC 1 (1,0) | 87 HV 3 (1,0) | 255 |
| 2 | 174 IC 2 (1,0) | 118 HV 1 (1,0) | 292 |
| 3 | 174 IC 2 (1,0) | 130 HV 4 (1,0) | 304 |
| 4 | 222 IC 3 (1,0) | 130 HV 2 (1,0) | 352 |
| 5 | 188 IC 4 (1,0) | 96 HV 3 (1,0) | 284 |

TAB 3: Beispiele 1 - 9

Herstellung der erfindungsgemäßen Vernetzungskomponenten (HK)

| Beispiel HK | Tle | HC | Tle | HDI (Mol) | Reaktions- temp. | Anlösung [1] | Kata- [2] lyse |
|---|---|---|---|---|---|---|---|
| 1 | 175 | HC 1 | 584 | HDI 2 (2,0) | 70°C | 80 X | 1,0 TEA |
| 2 | 207 | HC 2 | 912 | HDI 3 (3,0) | 75°C | 70 DGDME | -- |
| 3 | 976 | HC 5 | 1020 | HDI 1 (4,0) | 70°C | 80 DGDME | 1,0 DBTL |
| 4 | 367 | HC 4 | 1136 | HDI 5 (4,0) | 80°C | 70 MIBK | 0,5 DMBA |
| 5 | 1104 | HC 6 | 1110 | HDI 2 (3,8) | 65°C | 65 DGDME | -- |
| 6 | 221 | HC 3 | 1020 | HDI 1 (4,0) | 90°C | 90 X | 0,5 DBTL |
| 7 | 221 | HC 3 | 1232 | HDI 4 (3,5) | 90°C | 90 MIBK | 1,0 DMBA |
| 8 | 320 | HC 7 | 584 | HDI 2 (2,0) | 75°C | 80 X | 0,5 TEA |
| 9 | 308 | HC 8 | 912 | HDI 3 (3,0) | 80°C | 80 MIBK | 0,5 DMBA |

[1]  Gew.-% Festharz in Lösungsmittel

[2]  Gew.-% / Festharz

TAB 4

| Zusammensetzung der Bindemittelkombinationen für die Prüflacke, Zusammensetzung der Prüflacke und Einbrennbedingungen. | | | | | | |
|---|---|---|---|---|---|---|
| Bindemittelmischung | | | Lackzusammensetzung | | | Einbrennbedingung |
| Basisharz Tle (Festharz) | Härtungskomponente HK (Festharz) | Bindemittelmischung (1) | Pigmentpaste entspr. 25 Tlen Festharz + 40Tlen Pigment | Neutralisationsmittel (2) gesamt | Katalysator (3) | 20 Min/°C |
| 70 BH 1 | 30 HK 1 | 103 | 83 | 50 | 0,5 Sn | 150 |
| 75 BH 2 | 25 HK 2 | 107 | 83 | 40 | -- | 160 |
| 70 BH 3 | 30 HK 3 | 117 | 83 | 35 | -- | 140 |
| 80 BH 3 | 20 HK 4 | 123 | 83 | 35 | -- | 150 |
| 60 BH 2 | 40 HK 5 | 110 | 83 | 30 | 0,5 Pb | 150 |
| 80 BH 3 | 20 HK 6 | 118 | 83 | 35 | -- | 150 |
| 70 BH 3 | 30 HK 7 | 114 | 83 | 40 | 0,4 Sn | 140 |
| 70 BH 3 | 30 HK 8 | 117 | 83 | 40 | 0,5 Sn | 150 |
| 75 BH 2 | 25 HK 9 | 104 | 83 | 35 | 0,5 Pb | 150 |
| 70 BH 2 | 30 /V (5) | 103 | 83 | 60 | 1,0 Sn | 190 [4] |

(1) Entsprechend 75 Tlen Festharz

(2) Millimol Ameisensäure/100 g Festharz

(3) % Metall / Festharz Pb = Blei in Form von Bleioktoat Sn = Zinn in Form von Dibutylzinndilaurat

(4) Bei Einbrenntemperaturen unter 170°C keine ausreichende Filmbildung

(5) nicht erfindungsgemäß

**Patentansprüche**

1. Verfahren zur Herstellung von Vernetzungskomponenten für Hydroxylgruppen und/oder primäre oder sekundäre Aminogruppen aufweisende kationische Lackbindemittel, dadurch gekennzeichnet, daß man 50 bis 100 Mol-% der isocyanatreaktiven Gruppen von hydroxylfunktionellen Carbamatverbindungen, wie sie in bekannter Weise durch Reaktion von Alkylencarbonaten mit aliphatischen, primäre und/oder sekundäre und gegebenenfalls tertiäre, reaktionsinerte Aminogruppen aufweisenden Monoaminen und/oder Diaminen und/oder Triaminen und/oder Tetraaminen und/oder Alkanolaminen erhalten werden, mit jeweils entsprechenden äquimolaren Mengen an durch Monohydroxylverbindungen halbblockierten Diisocyanaten, deren Entblockungstemperatur unter 180°C liegt, bei 60 bis 120°C umsetzt.

2. Verfahren nach Anspruch 1, dadurch gekennzeichnet, daß man als hydroxylfunktionelle Carbamatverbindung ein Umsetzungsprodukt von Alkylencarbonaten mit sekundären Aminoverbindungen, wie sie durch Reaktion von 1 Mol aliphatischen, primäre Aminogruppen aufweisenden Diaminen mit 2 Mol Monoepoxidverbindung oder von 2 Mol aliphatischen, eine primäre Aminogruppe aufweisenden Monoaminen und/oder von aliphatischen, eine primäre und eine tertiäre reaktionsinerte Aminogruppe aufweisenden Diaminen mit 1 Mol Diepoxidverbindungen erhalten wurden, einsetzt.

3. Verwendung der nach den Ansprüchen 1 und 2 hergestellten Vernetzungskomponenten in Kombination mit Hydroxylgruppen und/oder primäre oder sekundäre Aminogruppen aufweisenden und nach Protonierung wasserverdünnbaren kationischen Basisharzen als Bindemittel für wasserverdünnbare Lacke, insbesonders für kathodisch abscheidbare Elektrotauchlacke.

**Claims**

1. Process for the production of crosslinking components for cationic paint binders having hydroxyl groups and/or primary or secondary amino groups, characterised in that 50 to 100 mol % of the isocyanate-reactive groups of hydroxyl-functional carbamate compounds, such as those obtained in the known manner by reaction of alkylene carbonates with aliphatic monoamines and/or diamines and/or triamines and/or tetraamines and/or alkanolamines, all these amines having primary and/or secondary and, if appropriate, tertiary reaction-inert amino groups, are reacted at 60 to 120°C with in each case corresponding equimolar amounts of diisocyanates which are half-blocked by monohydroxy compounds and have an unblocking temperature below 180°C.

2. Process according to Claim 1, characterised in that the hydroxyl-functional carbamate compound used is a reaction product of alkylene carbonates with secondary amino compounds, such as those which have been obtained by reaction of 1 mol of aliphatic diamines having primary amino groups with 2 mol of monoepoxide compound or of 2 mol of aliphatic monoamines having a primary amino group and/or of aliphatic diamines having a primary and a tertiary reaction-inert amino group with 1 mol of diepoxide compounds.

3. Use of the crosslinking components produced according to Claims 1 and 2 in combination with cationic base resins, which contain hydroxyl groups and/or primary or secondary amino groups and are water-dilutable after protonation, as binders for water-dilutable paints, especially for cathodically depositable electrodip coatings.

**Revendications**

1. Procédé de préparation de constituants réticulants pour des liants de peintures cationiques contenant des groupes hydroxy et/ou des groupes amino primaires ou secondaires, caractérisé en ce que l'on fait réagir, à une température de 60 à 120°C, 50 à 100 % en moles des groupes réactifs avec les isocyanates de composés de carbamates à fonctions hydroxy, tels qu'ils sont obtenus de façon connue par réaction de carbonates d'alkylène avec des monoamines et/ou des diamines et/ou des triamines et/ou des tétramines et/ou des alcanolamines aliphatiques contenant des groupes amino primaires et/ou secondaires et éventuellement tertiaires inertes dans les conditions de la réaction, avec des quantités équimolaires correspondantes de diisocyanates semi-bloqués par des composés monohydroxylés, dont la température de déblocage est inférieure à 180°C.

2. Procédé selon la revendication 1, caractérisé en ce que l'on utilise comme composé de carbamate à fonctions hydroxy un produit de réaction de carbonates d'alkylènes avec des composés amino secondaires tels qu'ils ont été obtenus par réaction de 1 mole de diamines aliphatiques contenant des groupes amino primaires avec 2 moles de composés monoépoxy, ou de 2 moles de monoamines aliphatiques contenant un groupe amino primaire et/ou de diamines aliphatiques contenant un groupe amino primaire et un groupe amino tertiaire inerte dans les conditions de la réaction avec 1 mole de composés diépoxy.

3. Utilisation des constituants réticulants préparés selon les revendications 1 et 2, en combinaison avec des résines de base cationiques contenant des groupes hydroxy et/ou des groupes amino primaires ou secondaires et diluables à l'eau après protonation, comme liants pour des peintures diluables à l'eau, en particulier pour des peintures applicables par cataphorèse.